# EUROPEAN PATENT APPLICATION

(11) **EP 4 115 983 A1**
(43) Date of publication of application: **11.01.2023**
(21) Application number: 21305958.7
(22) Date of filing: 09.07.2021
(51) Int. Cl.: B05B 3/00, B05B 15/00

(54) **PROCESS FOR REDUCING BUILD UP OF A WATER INSOLUBLE COMPOSITION IN A CENTRIFUGAL ATOMIZER**

(71) Applicant: EVERTREE, 60280 Venette (FR)
(72) Inventor: McGuire, Walt, NJ 08080 (US); Rogalewicz, Tyler Joseph, PA 18020-9408 (US)
(74) Representative: Santarelli

(57) **Abstract**

Process for spraying an emulsion of water insoluble composition, such as an emulsified resin, with a centrifugal atomizer. The centrifugal atomizer (1) comprises a housing (2), a rotary disc (4) provided in a recess (3) of the housing (2). An emulsion of a water insoluble composition is supplied to a chamber (11) or formed in the atomizer (1), the chamber (11) being formed between a front face (8) and a cone (4) of the rotary disc. A mist of air and an aqueous liquid is sprayed in the recess (3) of the housing (2). The mist flushes the atomizer and limits or avoid water insoluble composition build-up. The invention also relates a centrifugal atomizer system adapted to perform such process.

## Description

### Field of the Invention

The present invention relates to a process for spraying an emulsion of water insoluble composition such as a resin with a centrifugal atomizer.

The present invention is more particularly in the technical field of the manufacture of a lignocellulosic-based composite material. The invention is more particularly applicable to the preparation of a wood-based composite material comprising wood material bound by an adhesive comprising an emulsion of a water insoluble resin.

A preferred application of the present invention is the manufacture of oriented strand boards (OSB), i.e. wood-based composite boards formed by adding adhesives to wood strands and then compressing layers of wood strands in specific orientations.

### Background of the invention

To efficiently use liquid resin (such as isocyanate, epoxy or latex-based resin) as a binder in the manufacture of lignocellulosic-based composite material, such as oriented strand boards (OSB), particleboards (PB) and the like, centrifugal atomizers are known for producing a fog of atomized liquid resin.

An example centrifugal atomizer is known from document CA1330872.

Generally speaking, a centrifugal atomizer is a device comprising a fixed housing and a rotary disc, also called "spinning disc".

The rotary disc can have various configurations.

It comprises a substantially frustoconical part referred as "cone" comprising a front face.

The front face is provided with apertures adjacent the inner surface of the cone.

The front face and the cone form a chamber, behind the front face, i.e. between the front face and the inner surface of the cone.

The cone and the front face thus forms the rotary disc, also sometimes referred as "spinning disc".

When the atomizer is used, the rotary disc spins at high speeds.

Liquid resin is supplied, via at least one resin feed channel, to the chamber of the rotary disc.

The resin is propelled by the rotary motion of the disc through the apertures formed around the circumference of the front face of the disc, onto the inside surfaces of the cone, and sprayed as an atomized fog from sharp edges of the cone provided around its outermost periphery.

In such centrifugal atomizers, one or several air lines are also provided, that issue in a space formed behind the cone of the disc, i.e. between the rotary disc and the housing of the centrifugal atomizer.

The air lines are operative to create an air flow and to maintain a desired pressure in the atomizer, to helps atomization and resin projection.

In centrifugal atomizers, a problem that is generally encountered is the accumulation of resin and/or additives of the adhesive used, also called "build-up".

Build-up occurs in the clearance between the housing and the rotary disc, at the back of the disc, and on the rotary itself.

Resin build-up causes a decrease in the performance of the atomizer, and it can cause some malfunction. In the worst cases, the resin build-up can cause clogging, which prevents the device from functioning. Ultimately, build up is a safety issue as the atomizer - in particular the rotary disc - can break in use and cause severe damages to the rest of the manufacturing line.

In a production line of wood particles based panels (such as OSB), which is the preferred application of the present invention, resin build-up can negatively effects the consistent distribution of the full resin system onto the wood furnish, and this can result in lower board performance. In the worst case, a breakage of the rotary disk can damage the wood mill in which the resin spraying is performed.

To avoid build-up and clogging, the atomizer must be periodically stopped for cleaning.

Some solutions relating to this have been proposed in the prior art. Document CA2245345 discloses a centrifugal atomizer comprising a passageway for providing a solvent behind the rotary disc. The solvent is introduced during the resin spraying process with the aim of sweeping away the accumulated material in the atomizer, on the rotary disc and on the housing.

However, such solution cannot be used in some cases. For non-water-soluble resins, no adapted and efficient solvent is available for the production of lignocellulosic-based composite materials, in particular wood-based panels, for example because water-insoluble solvents can increase the flammability of the manufactured composite material.

The present invention thus aims at limiting or avoiding resin and/or additive build-up in a centrifugal atomizer used for spraying a water insoluble resin.

Use of emulsified resin is known, for example from WO 2011/156380 or WO 2016/101063.

Emulsified resin relates to an emulsion of water insoluble resin (e.g., isocyanate, epoxy or latex-based resin), and of an emulsifier mixture comprising an aqueous medium (e.g. water) and an emulsifier agent.

Using such emulsified resin is advantageous for improving the resin distribution in composite material manufacture. It might also help in build-up reduction, but it does not solve the above-described build-up issue.

As mentioned above, adapted solvent for water insoluble resin have drawbacks, and cannot be used for the production of lignocellulosic-based composite materials. Polar solvent, such as water, are not appropriate to solvate water insoluble resin, as proposed to avoid build up in the prior art.

### Invention summary

The invention thus relates to a process for spraying an emulsion of water insoluble composition, such as an emulsified resin, with a centrifugal atomizer. The centrifugal atomizer used comprises a housing and a rotary disc provided in a recess of the housing. The rotary disc comprises a front face provided with apertures and a cone. A chamber is formed between the front face and the cone. In the process of the present invention, an emulsion of a water-insoluble composition is supplied to the chamber or formed in the atomizer.

The emulsion of water insoluble composition is sprayed by the centrifugal atomizer, and a mist of air and an aqueous liquid is sprayed in the recess of the housing.

The mist of air and an aqueous liquid can be sprayed:
- in a space situated between the housing and an outer surface of the cone of the rotary disc, and/or
- in the chamber, and/or
- around a drive shaft of the centrifugal atomizer.

The mist of air and an aqueous liquid that is sprayed in the recess of the housing where rotary disc is installed flushes the centrifugal atomizer. Water insoluble composition build up is avoided in the clearance between the housing and the rotary disc. The invention is also effective against build up at the back of the disc, and also on the rotary disc itself. It should be noted that the aqueous liquid present in the mist is not a solvent for the water-insoluble composition (e.g. resin, adhesive, additive). The cleaning effect of the mist is thus not obtained by resin solvation as described in the prior art. Build up avoidance thanks to the combination of the used of emulsified composition (e.g. emulsified resin) and cleaning with a mist is effective and avoids mixing too much liquid with the emulsified composition.

The water present in the aqueous liquid of the mist will also participate in steam generation upon cooking of the piece made of the obtained material, and will contribute to the curing of the composite material. The water also reduces MDI emissions during manufacture (when MDI resin is used) and improves safety at the mill.

The aqueous liquid used to form the mist can be water.

Water is the most readily available aqueous liquid and does not present any disadvantage with respect to the composite material, compared in particular with the solvents of the water insoluble resins.

The water insoluble composition can comprise a water insoluble resin. More particularly, the water insoluble composition can be a water insoluble resin, or a composition comprising mainly a water insoluble resin and additives.

The water insoluble resin can be one of:
- a polyisocyanate-based prepolymer, such as an organic polyisocyanate; or a product of reaction between an organic polyisocyanate and, for example, a polypeptide, a polyol, an amine based polyol, an amine containing compound, a hydroxy containing compound, or a combination thereof; or a polymer comprising a terminal reactive isocyanate group
- an epoxy-based prepolymer, such as an epoxide containing compound, a product of reaction between an epoxy and, for example, a polypeptide, a polyol, an amine based polyol, an amine containing compound, a hydroxy containing compound, or a combination thereof;
- a latex-based prepolymer, a latex prepolymer,
or a combination thereof.

More particularly, the water insoluble resin can be an isocyanate resin such as 4,4'-methylene diphenyl isocyanate (MDI) or polymeric MDI (pMDI)

When the resin is an an epoxy-based prepolymer, the epoxy can be selected from the group consisting of a diglycidyl ether of bisphenol-A, a diglycidyl ether of bisphenol-A alkoxylate, an epoxy novolac resin, expoxidized soy oil, epoxidized linseed oil, epichlorohydrin, a glycidyl ether-type epoxy resin derived from a polyphenol by reaction with epichlorohydrin, and a combination thereof.

When a polyol is used in the prepolymer composition, the polyol can be an amine alkoxylate, polyoxypropylene glycol, polyoxyethylene glycol, polytetramethylene glycol, polyethylene glycol, propylene glycol, propane diol, glycerin, or a mixture thereof.

When an organic polyisocyanate is used, it can be selected from the group consisting of polymeric diphenylmethane diisocyanate (pMDI), 4,4'-methylenediphenyl, diisocyanate (4,4' -MDI), 2,4-methylenediphenyl, diisocyanate (2,4-MDI), toluene diisocyanate (TDI), hexamethylene diisocyanate (HDI), and a combination thereof.

The emulsion of water insoluble composition can comprise an aqueous emulsifier mixture comprising an aqueous medium and an emulsifier.

The emulsifier mixture can be an aqueous dispersion of a plant meal.

The emulsifier present in the emulsifier mixture helps the resin to be mixed with the aqueous medium (in particular water) present in the emulsifier mixture, thereby forming an emulsion. The emulsifier can be an isolated polypeptide (e.g. as described in WO 2010/102284) or a plant meal (e.g. as described in WO 2011/156380). The emulsifier mixture can be an aqueous dispersion of ground plant meal. The emulsifier mixture can comprise 0.1 to 99% by weight solid content, preferably 20% to 40% by weight, more preferably 20% to 25% by weight.

By "plant meal", it is meant a meal under a powder form obtained from a plant or a part thereof, in which can have been submitted to an extraction step such as, for example, a fat or protein extraction. In particular, the plant meal may be whole plant meal, defatted plant meal (such as solvent extracted plant meal), press cake (such as cold-press cake), protein isolate, protein concentrate or a mixture thereof. Preferably, the plant meal is a defatted plant meal (such as solvent extracted plant meal).

The solvent used to prepare the solvent extracted plant meal may be organic such as hexane and/or aqueous such as aqueous alcohol, preferably hexane.

By "protein isolate", it is meant a plant meal extract comprising at least 80 wt% proteins based on dry matter.

By "protein concentrate", it is meant a plant meal extract comprising at least 60 wt% and less than 80 wt% proteins based on dry matter.

Preferably, the plant meal is derived from corn, wheat, sunflower, cotton, castor, soy, camelina, flax, jatropha, mallow, pea, peanuts, sugarcane bagasse, tobacco and/or a plant of the genus *Brassica* (such as rape plant, canola, and/or *Brassica carinata*).

More preferably, the plant meal is derived from corn, flax, soy, sunflower and/or a plant of the genus *Brassica* (such as rape plant, canola and/or *Brassica carinata*).

Still more preferably, the plant meal is selected from the group consisting of corn draff, flaxseed meal, soybean meal, sunflower seed meal, rapeseed meal (in particular rapeseed meal), canola seed meal, rapeseed cold press cake, soy protein concentrate, soy protein isolate and *Brassica carinata* meal.

Even more preferably, the plant meal is sunflower meal or rapeseed (or canola) meal, in particular rapeseed (or canola) meal.

The plant meal can be heat treated by submitting a dry plant meal to a heat treatment under dry or wet conditions at a temperature and during a treatment time.

The emulsifier mixture can comprise ground plant meal, in particular ground oilseed (e.g., canola or rapeseed (the terms "canola" and "rapeseed" are used interchangeably in the present patent application), sunflower or soybean) meal having a D50 particle size in the range of 1 µm to 1000 µm, preferably of 20 µm to 500 µm (with e.g. D50 = 30 µm ; D90 = 100 µm). Such emulsifier mixture is for example described in WO 2011/156380.

The emulsifier mixture can also comprise biopolymer nanoparticles made with starch, e.g., corn starch and/or potato starch. The biopolymer can be made from crosslinked waxy starches.

The emulsifier can be an emulsifier described in US4472550, in particular a compound corresponding to the formula : R-X(CH₂-CH₂-O)ₙ-CO-NH-Y,
wherein
X is selected from the group consisting of: -O-, -NR'- , -CH₂-O-, or -S- ,
n is an integer from 10 to 50,
R' represents a C1 -C3 alkyl group,
R represents a radical selected from the group consisting of an aromatic radical having 6 to 9 carbon atoms, a cycloaliphatic radical having 3 to 9 carbon atoms and a heterocyclic radical having from 2 to 9 carbon atoms in the ring, and
Y represents the group obtained by removal of an isocyanate group from an organic polyisocyanate, preferably from the polyisocyanate (b).

The emulsifiers described in US3996154 can also be used.

If the emulsion of water insoluble composition is formed in the atomizer, the water insoluble composition can be supplied to the chamber and the aqueous emulsifier mixture can be supplied to the chamber so that the emulsion of water insoluble composition is formed upon passage of the composition and the aqueous emulsifier mixture through the apertures the front face of the rotary disc.

The mist of air and an aqueous liquid is advantageously sprayed continuously, i.e. during the entire spraying time of the composition.

A continuous spray of the mist prevents any start of resin build-up. The mist spraying allows a sufficiently low aqueous liquid supply (in particular water) not to impact the properties of the material produced. As the spraying is carried out continuously, the properties of the material produced are furthermore constant over the time of production.

The spraying process can end with a sequence comprising the successive steps of :
- stopping the resin composition supply;
- after a set time, stopping the mist supply;
- after a set time, stopping the disc rotation.

In an embodiment of the invention, the aqueous emulsifier mixture supply can be stopped upon the stopping the composition supply or between the stopping of the composition supply and the stopping the of mist supply.

The principle developed for stopping the centrifugal atomizer is that the aqueous mist continues to be sprayed after stopping the resin supply, so that the atomizer is purged of resin and resin build-up is reduced or avoided.

Preferably, the introduction of the resin must therefore be stopped first. When the resin is not supplied as an emulsified resin, i.e. when an aqueous emulsifier mixture is supplied to the centrifugal atomizer from a line other than that which supplies the resin, the supply of the aqueous emulsifier mixture may be continued after the supply of the resin to the centrifugal atomizer has been stopped. The supply of the aqueous emulsifier mixture is preferably stopped before the supply of the aqueous mist is stopped.

The invention also relates to a centrifugal atomizer system comprising a centrifugal atomizer comprising:
- a housing,
- a rotary disc provided in a recess of the housing, the rotary disc comprising a front face provided with apertures and a cone;
- a chamber formed between the front face and the cone , and
- one of :
   - a resin channel connected to a water insoluble resin source, the resin channel being configured for supplying a water insoluble composition to the chamber and an emulsifier channel connected to a source of an aqueous emulsifier mixture comprising an aqueous medium such as water and an emulsifier, the emulsifier channel being configured for supplying the aqueous emulsifier mixture to the chamber, and
   - an emulsion channel connected to a source of an emulsion of a water insoluble composition, the emulsion channel being configured for supplying the emulsion of a water insoluble composition to the chamber,
The centrifugal atomizer system further comprises a system for forming a mist of air and an aqueous liquid connected to a mist channel of the centrifugal atomizer issuing into the recess of the housing.

In such centrifugal atomizer, the mist of air and an aqueous liquid can be sprayed:
- in a space situated between the housing and an outer surface of the cone of the rotary disc, and/or
- in the chamber, and/or
- around a drive shaft of the centrifugal atomizer.

Such centrifugal atomizer system makes it possible to perform a process for spraying an emulsion of water insoluble resin according to the invention. It differs from the prior art system mainly in that it comprises a system for forming a mist air and a liquid and in that the centrifugal atomizer comprises one or several mist channels that issue behind the rotary disc of the centrifugal atomizer.

It should be noted that an atomizer according to the invention can be obtained by modifying the housing of atomizers commercially available on the market.

The centrifugal atomizer can comprise three to six mist channels. Three mist channels have proven to be sufficient is most cases to avoid emulsified resin build-up during the tests performed by the Applicant. Each mist channels is fluidically linked to a flush port. The flush ports have preferably a regular distribution in the atomizer chamber, for example such that they are substantially equidistant from each other. In some embodiments, four, five, or six mist channels are used.

The system for forming a mist of air and a aqueous liquid can comprise one or several misting modules , each misting module comprising :
an air inlet provided with a pressure regulator;
a liquid inlet provided with a flow modulating valve;
a misting tube where liquid and air meet and form a mist.
Each misting module can be independent, running on its own flow (PID) loop.

The amount of mist produced and the air/liquid ratio of the mist can thus be precisely be controlled.

The centrifugal atomizer can comprise several mist channels, wherein it comprises a system for transporting the mist from the system for forming a mist to the mist channels, the system for transporting the mist comprising a manifold for mist collection from the misting module(s) and a mist distributor for distribution of the mist between the mist channels.

The distance travelled by the mist between the system for forming a mist of air and a liquid and the centrifugal atomizer is advantageously as small as possible. This is to ensure that the liquid present in the mist remains suspended in the air. The system for transporting the mist is thus configured to limit this distance.

The invention also relates to the use of a centrifugal atomizer system as above described for spraying an emulsified composition, in particular an emulsified resin.

The air and mist are supplied at a pressure comprised between 10 and 25 psi such as 22 psi (152kPa), and the aqueous liquid flow rate to form the mist is comprised between 0.01 and 1 gallon per minute (0.000758 L/s to 0.075768 L/s), preferably 0.1 gallon per minute (0.007577 L/s)

Such running parameters have been successfully tested by the Applicant.

The resulting mist can thus be composed of 0.01 to1 gal/min of water at a pressure of 10 to 25 psi.

### Brief description of the figures

Figure 1 is a sectional view of a centrifugal atomizer according to an embodiment of the invention,
Figure 2 is a sectional view of the housing of a centrifugal atomizer according to an embodiment of the invention,
Figure 3 is a schematic three-dimensional view of the housing of a centrifugal atomizer according to an embodiment of the invention, seen from the from the front and slightly to the side,
Figure 4 is a schematic three-dimensional view of a centrifugal atomizer according to an embodiment of the invention, seen from the back,
Figure 5 is a sectional view of a centrifugal atomizer according to another embodiment of the invention,
Figure 6 is a schematic diagram representing a centrifugal atomizer according to an embodiment of the invention.

### Detailed description of embodiments of the invention

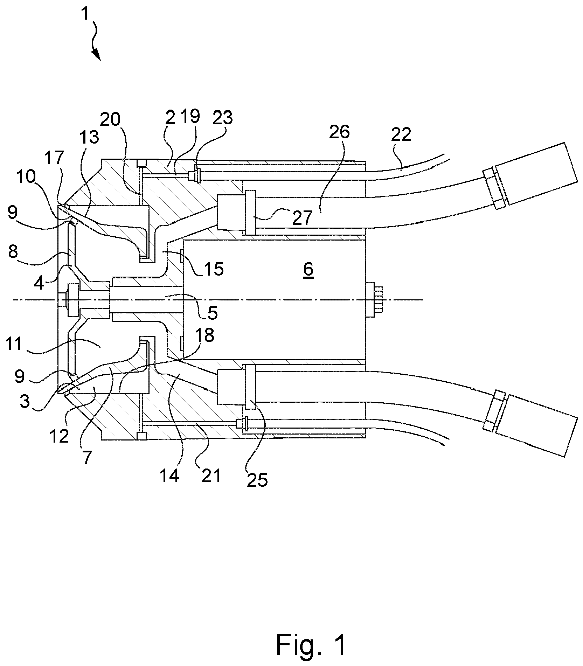

Figure 1 is a sectional view of a centrifugal atomizer 1 according to an embodiment of the invention.

Centrifugal atomizers are used to spray a fog of resin or resin based adhesive in the manufacture of a lignocellulosic-based composite material. They can be used in particular for the manufacture of oriented strand boards and / or particleboards (PB) or (OSB).

The resin is generally applied to the lignocellulosic materials (such as wood particles or strands) in a continuous process with a centrifugal atomizer as the materials are tumbled in a rotating drum.

The centrifugal atomizer 1, also sometimes called "rotary atomizer" comprises a housing 2.

The housing can have the form of a cylinder, having a recess 3 at an end of the housing.

The centrifugal atomizer 1 also comprises a rotary disc 4. The rotary disc 4 is provided at least in part in the recess 3 of the housing 2. The rotary disc 4 is mounted on a rotatable shaft 5, driven by a motor 6.

The rotary disc 4 comprises a cone 7 and a front face 8 (also referred as front plate). The cone 7 is a substantially frustoconical part. The front face 8 is inside the cone 7, and extends parallel to the small base and large base of the cone 7. The front face 8 and the cone 7 are formed of a single part, or are rigidly fixed together.

The front face is provided with apertures 9 adjacent the inner surface 10 of the cone 7.

The front face and the cone 7 form, with the housing 2, a chamber 11, between the front face 8 and the inner surface 10 of the cone. A space 12 is situated between the housing 2 and an outer surface 13 the cone 7 of the rotary disc 4.

In the represented embodiment, the centrifugal atomizer comprises a resin channel 14. The resin channel is connected to a source of a water insoluble composition (not shown in Figure 1), such as a reservoir of water insoluble resin.

The resin channel issues into the chamber 11 of the centrifugal atomiser.

In the embodiment of Figure 1, the centrifugal atomizer further comprises an emulsifier channel 15 connected to a source of an aqueous emulsifier mixture, such as a reservoir of aqueous emulsifier mixture. The aqueous emulsifier mixture comprises water and an emulsifier. The emulsifier helps form an emulsion with water insoluble resin. The emulsifier can advantageously be a ground plant meal. The aqueous emulsifier mixture can be a dispersion of a ground plant meal.

When the centrifugal atomizer is used, the rotary disc 4 rotates at a very high speed, such as 10 000 rpm. The resin and aqueous emulsifier mixture is carried by centrifugal force to the outer part of the chamber 11. The resin and aqueous emulsifier mixture exit the chamber through the apertures 9.

When the resin and the aqueous emulsifier mixture meet in the chamber 11 and are submitted to a high mixing caused by the rotation of the rotary disc 4, and when they pass through the aperture 9, they mix an emulsion.

The so-formed emulsion of water insoluble resin flows at the surface of the rotary disc 4, under the effect of centrifugal force, onto the outer rim 16 of the cone 7.

A clearance 17 is formed between the outer surface 13 of the cone 7 and an interior surface 18 of the recess 3. In operation, a vortex is created by the rotation of disc 4, causing an accumulation of the emulsified resin within the clearance 17. Emulsified resin also accumulates over the inner surface of the cone 10 and over the front face 8.

Such accumulation, also called "build-up", is detrimental for the proper operation of the centrifugal atomizer. It results in higher amperage motor requirements and may lead to motor burnout. The resin can also accumulate on the atomizer control devices such as on a speed sensor located in the space 12 behind the rotary disc 4. When wood boards are produced, resin build up also negatively impacts resin distribution onto the furnish and results in lower board performance such as thickness swell properties.

According to the present invention, the centrifugal atomizer comprises at least one mist channel 19, and preferably several mist channels 19.

For example, three mist channels can be provided. Each mist channel issues into the space 12 behind the rotary disc 4. The mist channels have a terminal section 20 having a restricted section, such as a diameter of 2 mm.

The mist channels can be provided in complement or alternatively to air channels 21.

In the represented example embodiment, each mist channel 19 is supplied with mist by a mist line 22. Each mist line 22 is connected to a mist channel 19 by mist port 23, for example sized at 1/16 inch, or 1/8 inch.

The resin channel 14 can be connected to the resin source by a resin line 24, the resin channel and the resin line 24 being connected by a resin port 25 for example sized at ½ inch. The emulsifier channel 15 can be connected to the source of an aqueous emulsifier mixture by an emulsifier line 26, the emulsifier channel and the emulsifier line 26 being connected by a emulsifier port 27 for example sized at ½ inch.

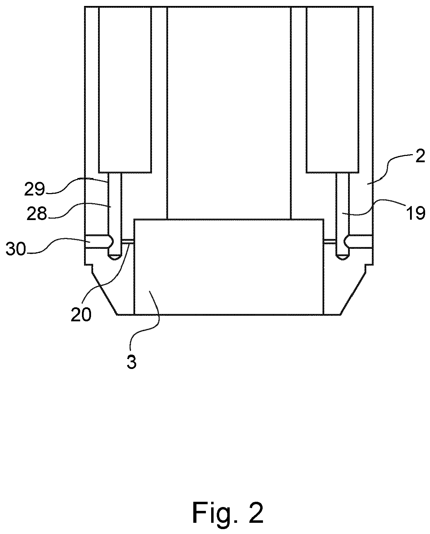

An example embodiment of the mist channels is shown in Figure 2, which is a sectional view of the housing of a centrifugal atomizer according to an embodiment of the invention. The rotary disc 4, motor 6, rotatable drive shaft 5 and other parts of the centrifugal atomizer are thus not represented in Figure 2. The mist channel 19 is formed by:
- a first bore 28 provided with a thread 29 at its end, for example a 1/8 inch thread,
- a second bore 30, orthogonal to the first bore 28, for example of the M10 type (that is to say having a diameter of 10mm) allowing the piercing of the end section 20, and which is then plugged, and
- the end section 20 which has for example a diameter of 2 mm.

The end section opens in the recess 3 of the housing 2, at a location towards the bottom of the recess 3.

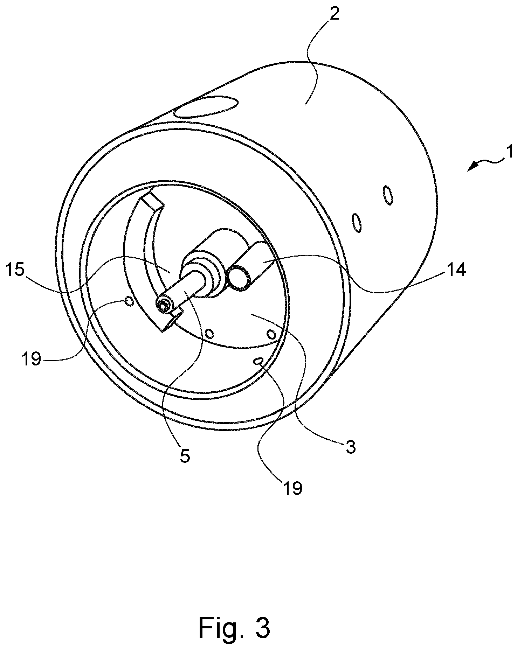

Figure 3 is a schematic three-dimensional view of the housing of a centrifugal atomizer according to an embodiment of the invention, seen from the front, i.e. with the recess 3 in the foreground. The rotary disc 4 is omitted in Figure 3. Figure 3 shows the mouth of the resin channel 14 and of the emulsifier channel 14 in the recess 3 of the housing 2. Figure 3 also shows the openings of the mist channels 19 (flush ports) into the recess 3. The mist channels are distributed around the bottom edge of the recess 3, e.g. with an even angular distribution.

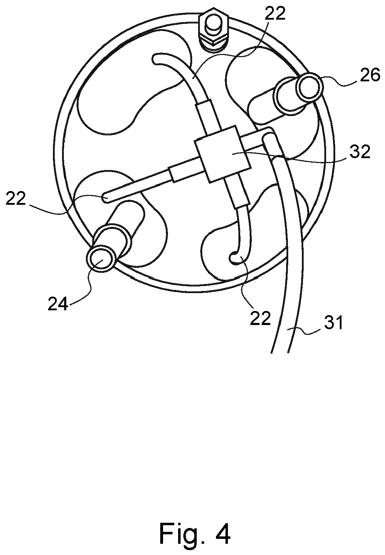

Figure 4 is a schematic three-dimensional view of a centrifugal atomizer according to an embodiment of the invention, seen from the back, and thus shows the arrivals of the different lines in the centrifugal atomizer:
- the resin line 24,
- the emulsifier line 26,
- the mist lines 22 (namely three mist lines in the represented embodiment).

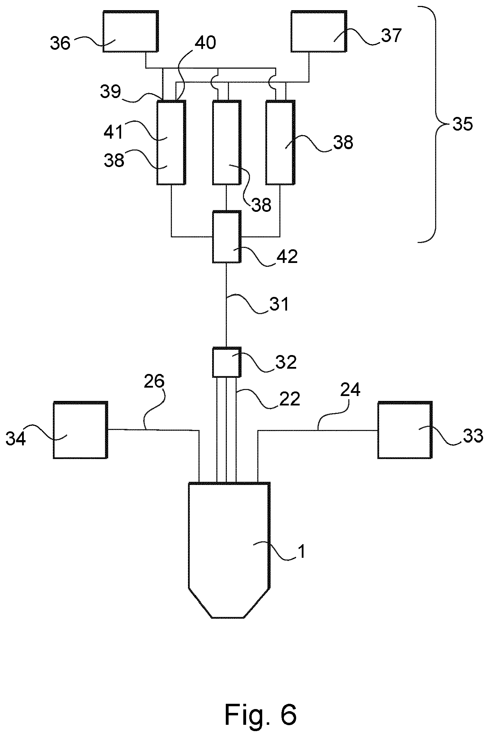

Figure 4 also shows how the several mist lines 22 can be supplied with a mist of air and an aqueous liquid. In the represented embodiment, the mist is produced in a system forming a mist detailed hereafter with reference to Figure 6. A system is provided for transporting the mist from the system for forming a mist to the mist channels 19. The system for transporting the mist comprises a main duct that transports the mist to a distributor 32 which distributes the mist between the mist lines 22 and thus the mist channels 19.

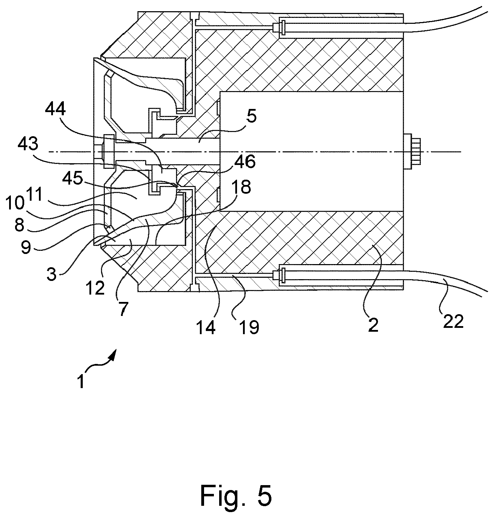

Figure 5 is a sectional view of a centrifugal atomizer according to another embodiment of the invention.

The centrifugal atomizer of Figure 5 essentially corresponds to that presented with reference to Figures 1 to 4. It is thus possible to refer to the above description of Figures 1 to 4, except for the differences described below.

The resin line(s) and the optional emulsifier line(s) are not shown in Figure 5, because they are not in the represented section plane. However, their configuration may be similar to that of Figure 1.

Although the systems have a similar general operation, the configuration of the rotary disc 4 of the centrifugal atomizer of Figure 5 is different from the configuration of the disc of the centrifugal atomizer of Figures 1 to 4.

In the embodiment of Figure 5, the rotary disc 4 comprises a cone 7, a front face 8 and a back plate 43. The back plate 43 closes the back of the chamber 11 that is formed inside the cone 7. A volume 44 around the shaft 5 is thus formed in the recess 3, behind the back plate 43. This space can be subject to build-up.

The mist channels 19 issue in the chamber 11 and in the volume 44 around the shaft 5. More particularly, one or several mist channels 19 may have a first terminal branch 45 that issues in the chamber 11 and a second terminal branch 46 that issues in the volume 44. For example, the centrifugal atomizer can comprise two flush ports in the volume 44 around the shaft (advantageously diametrically opposed), and four flush ports in the chamber 11.

The mist channel configuration of Figure 1 and mist channel configuration of Figure 5 can be implemented as alternatives or complements. In other words, in various embodiments of the invention, mist channels can issue :
- in the space situated between the housing 2 and an outer surface 13 of the cone 7 of the rotary disc 4, and/or
- in the chamber 11, and/or
- in the volume 44 around the drive shaft 5 of the centrifugal atomizer.

In the volume 44, the mist can be sprayed towards the drive shaft 4 and/or in other directions, e.g. radially.

Figure 6 is a schematic diagram representing a centrifugal atomizer system according to an embodiment of the invention.

The centrifugal atomizer system comprises a centrifugal atomizer 1 such as the centrifugal atomizer described with reference to Figures 1 to 4. A water-insoluble resin is supplied to the centrifugal atomizer 1 by the resin line 24 that is connected to a resin source 33, such as a resin reservoir.

An aqueous emulsifier mixture is provided to the centrifugal atomizer 1 by the emulsifier line 26 that is connected to an aqueous emulsifier mixture source 34, such as an aqueous emulsifier mixture reservoir. The aqueous emulsifier mixture can be a dispersion of a ground plant meal.

As represented in Figure 4, a mist of air and an aqueous liquid is provided to the centrifugal atomizer 1 by mist lines 22 issuing from a distributor 32, that is supplied with mist by a main duct 31, issuing from a system for forming a mist 35 of air and a liquid.

The system for forming a mist 35 of air and a liquid comprises a source of compressed air 36, and a source of a liquid 37. The liquid used is a polar solvent, preferably an aqueous liquid, such as water. The system for forming a mist 35 of air and an liquid comprises one or several misting modules 38 (three misting modules 38 in the represented embodiment), each misting modules 38 comprising :
- an air inlet 39 provided with a pressure regulator;
- a liquid inlet 40 provided with a flow modulating valve;
- a misting tube 41.

The liquid and the air meet in the misting tube, where they form a mist thanks to the misting tube configuration and thanks to an adapted control.

Advantageously, each misting module 41 is independently controlled, for example thanks to a PID loop control.

The mist formed in each misting module 38 can be collected in a manifold 42, to be then transported via the main duct 31 to the distributor 32. The manifold 42, the main duct 31 and the distributor 32 form a system for transporting the mist from the system for forming a mist 35 to the vicinity of the centrifugal atomizer 1.

In the embodiments described with reference to Figures 1 to 6, the centrifugal atomizer is supplied with water insoluble resin and with an aqueous emulsifier mixture to form an emulsion in the centrifugal atomizer. In alternative embodiments, the emulsion of water insoluble resin (or, more generally, of water insoluble composition) can be formed outside the centrifugal atomizer and provided to the centrifugal atomizer via one or several emulsifier lines. In embodiments of the invention, the centrifugal atomizer can comprise several resin lines and/or several emulsifier lines.

According to various embodiments of the invention, the number and the distribution of the mist lines in the centrifugal atomizer can vary.

The applicant has carried out the process of the invention successfully under various conditions. By way of example, the following tests were carried out successfully, that is to say without a notable accumulation of resin or additive occurring.

It was moreover verified by a comparative test that under the same conditions as described hereafter but in the absence of injection of an aqueous mist into the centrifugal atomizer, also without a modification of the existing standard atomizer, and/or without the use of emulsion, an accumulation of resin occurs on the atomizer.

### Example 1:

A composite material containing wood and an adhesive containing an emulsified resin was formed.

The resin used was a polymeric MDI isocyanate (pMDI) sold by HUNTSMAN POLYURETHANES under reference Rubinate^{®} 1840. The resin was supplied to the centrifugal atomizer at 0.54 gal/min (2 L/min).

The emulsifier used was ground canola meal D50 = 30 µm ; D90 = 100 µm, sold by EVERTREE.

The emulsifier was provided in the form of an emulsifier mixture (namely a dispersion in water) to the centrifugal atomizer, at 0.86 gal/min (3,26 L/min).

The solid content of the emulsifier mixture comprising the emulsifier was 20% by weight.

Wood particles were provided at 6600 Ib/h (2994 kg/h).

A mist of water in air was sprayed continuously through 3 mist channels, water being provided at 0.1 gal/min (0,38 L/min) and the air being provided at 22 psi (1.52 bar).

The resin injection was performed for 4 hours.

At the end of resin supply, the emulsifier mixture injection was performed for 30 extra seconds.

The mist of water in air was supplied for 1 min after the end of the resin supply, at 0.75 gal/min (2,84 L/min).

The centrifugal atomizer was run for 1 minute after the end of the mist injection.

### Example 2:

The same resin as in Example 1 was used. It was supplied to the centrifugal atomizer at 0.50 gal/min (1.9 L/min).

The same emulsifier as in Example 1 was used. It was supplied at 1.12 gal/min (4.24 L/min).

The solid content of the emulsified resin comprising the resin and the emulsifier mixture was 25.4%.

Wood particles were provided at 6600 Ib/h (2994 kg/h).

A mist of water in air was sprayed continuously through 3 mist channels, water being provided at 0.25 gal/min (0.95 L/min) and the air being provided at 22 psi (1.52 bar).

The resin injection was performed for 4 hours.

At the end of resin supply, the emulsifier mixture injection was performed for 30 extra seconds.

The mist of water in air was supplied for 1 min after the end of the resin supply, at 0.75 gal/min (2.84 L/min).

The centrifugal atomizer was run for 1 minute after the end of the mist injection.

The results of the performed tests (Examples 1 and 2) have shown that build up was eliminated on the outside of the atomizer, between the cone and the atomizer, and very little in any residual build up remained behind the atomizer head and inside the cone, compared to referenced conditions using i) pMDI resin as in Example 1 or ii) using pMDI emulsified with the emulsifier mixture of Example 1, wherein no mist of water was spayed leading to build up.

The results have proven that the centrifugal atomizer flushing with a mist of a liquid that is not a solvent for the emulsified resin used is effective to reduce or even eliminate build-up on both the cone and housing unit of the atomizer along with a very low addition of water.

Thanks to a continuous spraying of the flushing mist, the properties of the material produced are furthermore constant over the time of production.

They have also proven to be applicable to a large range of solid content in the emulsifier mixture and in the emulsified resin.

The process of the present invention, which combine the use of a modified atomizer, the use of emulsified resin, and spraying a mist air and an aqueous liquid in the atomizer, provides an improved solution for manufacturing composite wood panels, in particular OSB, compared to prior art solutions. The improvements include:
- better or more efficient and consistent distribution of resin (e.g., MDI) onto wood furnish,
- less build up on atomizer over time,
- ease of cleaning parts: atomizers, blenders,
- less downtime , and consequently more manufacturing time,
- increased cure *versus* straight MDI,
- improved safety due to lower probability of atomizers breaking off during production and also lower resin (e.g., MDI emissions) at manufacturing site.

It should be understood that various changes and modifications to the presently preferred embodiments described herein will be apparent to those skilled in the art. Such changes and modifications can be made without departing from the scope of the present invention and without losing its attendant advantages. It is therefore intended that such changes and modifications be covered by the appended claims.

The results, examples, and detailed embodiments are only provided by way of example.

## Claims

1. Process for spraying an emulsion of water insoluble composition, such as an emulsified resin, with a centrifugal atomizer, the centrifugal atomizer (1) comprising :
a housing (2),
a rotary disc (4) provided in a recess (3) of the housing (2), the rotary disc (4) comprising a front face (8) provided with apertures (9) and a cone (7),
a chamber (11) being formed between the front face (8) and the cone (4),
wherein an emulsion of a water insoluble composition is supplied to the chamber (11) or formed in the atomizer (1),
wherein the emulsion of water insoluble composition is sprayed by the centrifugal atomizer (1),
and wherein a mist of air and an aqueous liquid is sprayed in the recess (3) of the housing (2).

2. Process according to claim 1, wherein the mist of air and an aqueous liquid is sprayed:
- in a space situated between the housing (2) and an outer surface (13) of the cone (7) of the rotary disc (4), and/or
- in the chamber (11), and/or
- in a volume (44) around a drive shaft (5) of the centrifugal atomizer (1).

3. Process according to claim 1 or claim 2, wherein the aqueous liquid is water.

4. Process according to any one of claims 1 to 3, wherein the water insoluble composition comprises a water insoluble resin.

5. Process according to claim 4, wherein the water insoluble resin is one of
- a polyisocyanate-based prepolymer, such as an organic polyisocyanate; or a product of reaction between an organic polyisocyanate and, for example, a polypeptide, a polyol, an amine based polyol, an amine containing compound, a hydroxy containing compound, or a combination thereof; or a polymer comprising a terminal reactive isocyanate group
- an epoxy-based prepolymer, such as an epoxide containing compound, a product of reaction between an epoxy and, for example, a polypeptide, a polyol, an amine based polyol, an amine containing compound, a hydroxy containing compound, or a combination thereof;
- a latex-based prepolymer, a latex prepolymer, or a combination thereof.

6. Process according to claim 4, wherein the water insoluble resin is an isocyanate resin such as pMDI.

7. Process according to any one of the preceding claims, wherein the emulsion of water insoluble composition comprises an aqueous emulsifier mixture comprising an aqueous medium and an emulsifier.

8. Process according to claim 7, wherein the emulsifier mixture is an aqueous dispersion of a plant meal.

9. Process according to claim 7 or claim 8, the emulsion of water insoluble composition being formed in the atomizer, wherein the water insoluble composition is supplied to the chamber (11) and the aqueous emulsifier mixture is supplied to the chamber (11) so that the emulsion of water insoluble composition is formed upon passage of the composition and the aqueous emulsifier mixture through the apertures (9) the front face (8) of the rotary disc (4).

10. Process according to any one of the preceding claims, wherein the mist of air and an aqueous liquid is sprayed continuously, i.e. during the entire spraying time of the composition.

11. Process according to any one of the preceding claims, wherein
the spraying process ends with a sequence comprising the successive steps of :
- stopping the composition supply;
- after a set time, stopping the mist supply;
- after a set time, stopping the disc rotation.

12. Process according to claim 9 and claim 11, wherein the aqueous emulsifier mixture supply is stopped upon the stopping the composition supply or between the stopping of the composition supply and the stopping the of mist supply.

13. Centrifugal atomizer system comprising a centrifugal atomizer (1) comprising :
• a housing (2),
• a rotary disc (4) provided in a recess (3) of the housing (2), the rotary disc (4) comprising a front face (8) provided with apertures (9) and a cone (7)
• a chamber (11) formed between the front face (8) and the cone (7), and
• one of :
- a resin channel (14) connected to a water insoluble resin source (33), the resin channel (14) being configured for supplying a water insoluble composition to the chamber (11) and an emulsifier channel (15) connected to a source of an aqueous emulsifier mixture comprising an aqueous medium such as water and an emulsifier, the emulsifier channel (15) being configured for supplying the aqueous emulsifier mixture to the chamber (11), and
- an emulsion channel connected to a source of an emulsion of a water insoluble composition, the emulsion channel being configured for supplying the emulsion of a water insoluble composition to the chamber (11),
wherein the centrifugal atomizer system further comprises a system for forming a mist (35) of air and an aqueous liquid connected to a mist channel (19) of the centrifugal atomizer (1) issuing into the recess (3) of the housing (3).

14. Centrifugal atomizer system according to claim 13, wherein the mist of air and an aqueous liquid is sprayed:
- in a space situated between the housing (2) and an outer surface (13) of the cone (7) of the rotary disc (4), and/or
- in the chamber (11), and/or
- in a volume (44) around a drive shaft (5) of the atomizer.

15. Centrifugal atomizer system according to claim 14, wherein the centrifugal atomizer (1) comprises three to six mist channels (19).

16. Centrifugal atomizer system according to claim 14 or claim 15, wherein the system for forming a mist (35) of air and an aqueous liquid comprises one or several misting modules (38), each misting module (38) comprising :
an air inlet (39) provided with a pressure regulator;
a liquid inlet (40) provided with a flow modulating valve;
a misting tube (41) where liquid and air meet and form a mist.

17. Centrifugal atomizer system according to claim 16, wherein each misting module (38) is independent, running on its own flow (PID) loop.

18. Centrifugal atomizer system according to any one of claims 14 to 17, the centrifugal atomizer (1) comprising several mist channels (19), wherein it comprises a system for transporting the mist from the system for forming a mist to the mist channels, the system for transporting the mist comprising a manifold (42) for mist collection from the misting module(s) and a mist distributor (32) for distribution of the mist between the mist channels (19).

19. Use of a centrifugal atomizer system according to one of claims 14 to 18 for spraying an emulsified composition.

20. Use according to claim 19, wherein air and mist are supplied at a pressure comprised between 10 and 25 PSI such as 22 PSI (152kPa), and the aqueous liquid flow rate to form the mist is comprised between 0.01 and 1 gallon per minute (0.000758 L/s to 0.075768 L/s), preferably 0.1 gallon per minute (0.007577 L/s).
